# EUROPEAN PATENT APPLICATION

(11) **EP 0 673 964 A2**
(43) Date of publication of application: **27.09.1995**
(21) Application number: 95301860.3
(22) Date of filing: 21.03.1995
(51) Int. Cl.: C08K 3/00, C08K 7/00, B29C 49/00

(54) **Thermoplastic material for blow moulding**

(30) Priority: 22.03.1994 GB 9405578; 08.04.1994 GB 9406990
(71) Applicant: DRAFTEX INDUSTRIES LIMITED, Edinburgh EH3 6YY, Scotland (GB)
(72) Inventor: Urbain, Didier, FR-49500 Sainte Gemmes d'Andigne (FR); Breheret, Joel, FR-44199 Treillieres (FR); Renzo, Bernard, FR-44300 Nantes (FR)
(74) Representative: Foster, David Martyn

(57) **Abstract**

A composite material is disclosed for producing products such as protective bellows by a blow-moulding process and which have to withstand a wide range of temperatures. The material comprises thermoplastic material to which is added between 0.5% and 10% of a charge such as talc or chalk or fibre material such as glass fibre, carbon fibres or fibres of aromatic polyamide or cellulose.

## Description

The invention relates to composite thermoplastic material. One application of such material is for the manufacture of protective bellows for use in vehicle transmission systems. Other possible applications are for protective bellows for the steering mechanism or for shock absorbers of vehicles. However, these are merely examples and the material is not restricted for use on vehicles.

Such bellows need to be able to withstand a wide range of temperatures without any deterioration in their operational characteristics. For example, they need to be able to withstand low temperatures of the order of -40°C. With the increasing use of catalysers for the exhaust systems of motor vehicles, which may be located close to protective bellows on the vehicle's transmission, and which operate at high temperature, such bellows also need to be able to withstand high temperatures of the order of +160°C.

It is known to use vulcanised elastomers such as ordinary acrylic ethylenes for the manufacture of such bellows. Such materials have good high temperature operational characteristics but are subject to rigidification at low temperatures and cannot satisfactorily be used below -30°C. Bellows produced from such material are expensive because of the manufacturing process required, relatively heavy in weight, and not easily recycled.

Thermoplastic materials are also used, but present thermoplastic materials cannot satisfactorily handle a temperature range from -40°C to +160°C. Thermoplastic materials commonly used for protective transmission bellows are unsatisfactory at temperatures above +120°C because, above this temperature, the dynamic characteristics of the material deteriorate. Grades of thermoplastic material presently available which do preserve their dynamic characteristics at high temperature are unsatisfactory at low temperatures because of significant rigidification.

According to the invention, there is provided a composite material suitable for blow-moulding and comprising a thermoplastic material in combination with an additional charge of an inert material.

Examples of materials suitable for producing thermoplastic materials, and embodying the invention, will now be described.

The examples to be described are made from commercially available thermoplastic material, such as having a hardness between 0 and 55 Shore D, and having good resistance to low temperatures (down to -40°C), to which material is homogenously added, in accordance with the invention, a charge which increases the modulus at high temperatures without causing any deterioration in the properties of he material at low temperatures; in other words, there is only a very slight increase in rigidity of the material at low temperatures (down to -40°C).

The amount of the added charge should be between 0.5 per cent and 10 per cent of the total weight of the material. The charge preferably is of an inert nature. Suitable charge materials are talc or chalk or reinforcement fibre material such as glass fibre, carbon fibre, or fibres of cellulose or aramide.

The composite material thus produced can be processed by blow-moulding (extrusion or injection). Such processes tend to orientate the fibres in the material so as to be parallel to the direction of flow. The final product thus obtained possesses an anisotropy of properties which produces good resistance to centrifugal effects while retaining flexibility in a transversal sense and without increasing the stiffness of the material. The final products are thus well suited to withstand the forces likely to arise in practice during use of the bellows, in particular forces acting axially on the bellows and also angular forces produced by angular movement of transmission joints.

Such composite materials can have a bending modulus above 30 MPascal at 160°C but can also have a bending modulus less than 1250 MPascal at -40°C. Where the charge comprises fibre material, these values are obtained in the direction in which the fibres are orientated by the blow-moulding process.

In the case where the charge comprises fibres, these are preferably short fibres not more than about 5mm in length and 0.5mm in diameter.

## Claims

1. A composite material suitable for blow-moulding and comprising a thermoplastic material in combination with an additional charge of an inert material.

2. A material according to claim 1, in which the charge comprises talc or chalk.

3. A material according to claim 1, in which the charge comprises reinforcing fibre material.

4. A material according to claim 3, in which the fibre material comprises a material selected from the group comprising glass fibre material, carbon fibre material, aramide fibres and cellulose fibres.

5. A material according to claim 3, in which the length of the fibres is of no more than 5mm and their diameter is no more than 0.5mm.

6. A material according to claim 5, in which the fibres become orientated parallel to each other by and in the direction of the blow-moulding process.

7. A material according to claim 1, in which the thermoplastic elastomer has a hardness between 40 and 55 Shore D.

8. A material according to claim 1, in which the thermoplastic elastomer and the charge are combined homogenously.

9. A material according to claim 1, in which the charge comprises between 0.5 per cent and 10 per cent by weight of the total weight.

10. A material according to claim 1, having a bending modulus above 30 MPascal at 160°C and a bending modulus less than 1250 MPascal at -40°C.

11. A material according to claim 6, in which the bending modulus in the direction of the fibres is above 30 MPascal or 160°C and the bending modulus in the direction of the fibres is less than 1250 MPascals at -40°C.

12. A protective bellows for use in an automobile, produced by blow-moulding of a composite thermoplastic material according to any preceding claim.
